# EUROPÄISCHE PATENTSCHRIFT

(11) **EP 3 104 756 B1**
(45) Veröffentlichungstag und Bekanntmachung des Hinweises auf die Patenterteilung: **21.08.2019**
(21) Anmeldenummer: 15710100.7
(22) Anmeldetag: 16.02.2015
(51) Int. Cl.: A47J 37/07

(54) **GRILLVORRICHTUNG IN KEGELFORM**
GRILL OF CONICAL SHAPE
DISPOSITIF POUR RÉALISER DES GRILLADES, SE PRÉSENTANT SOUS FORME CONIQUE

(30) Priorität: 16.02.2014 DE 202014001307 U
(43) Veröffentlichungstag der Anmeldung: 21.12.2016
(73) Patentinhaber: Kaiser, Thomas, 87463 Schrattenbach (DE); Wassermann, Christian, 87647 Kraftisried (DE)
(72) Erfinder: Kaiser, Thomas, 87463 Schrattenbach (DE); Wassermann, Christian, 87647 Kraftisried (DE)
(74) Vertreter: Fiener, Josef
(86) Internationale Anmeldenummer: PCT/EP2015/000335
(87) Internationale Veröffentlichungsnummer: WO 2015/120989

(56) Entgegenhaltungen:
- US-A- 2 950 712
- US-A- 3 126 881
- US-A- 5 099 821

## Beschreibung

Die Erfindung betrifft eine Grillvorrichtung gemäss den oberbegrifflichen Merkmalen des Anspruches 1.

Derartige Grillvorrichtungen sind weit verbreitet, wobei eine kegelförmige Außenschale von vielen Nutzern bevorzugt wird, weil damit ein sog. Kamineffekt mit stabilen Luftzug- und Brennbedingungen und somit eine besonders gleichmäßige Garung von Nahrungsmitteln über einer Heizquelle, meist glühender Holzkohle oder Grill-Briketts erreicht werden kann. Für das Grillgut ist der einstellbare Abstand von der Holzkohle von besonderer Bedeutung. Ist das Grillgut zu weit entfernt, wird dieses nicht ausreichend gegart. Andererseits kann es bei zu geringem Abstand zum Ankohlen des Grillgutes kommen, wodurch dieses ungenießbar wird. Um den Abstand zwischen Grillgut und Heizquelle zu verändern, weisen herkömmliche Grillgeräte oft versetzte Rasterungen oder Schlitze auf, in die der Grillrost entsprechend eingehängt oder eingesteckt wird. Nachteilig ist, dass hierbei eine Kippgefahr für den Grillrost besteht, wenn dieser zur Abstandsveränderung aus den Schlitzen entfernt wird, um dann in höher oder tiefer gelegene Rastschlitze eingeführt zu werden. Dies ist mühsam und meist nur mit Handschuhen durchführbar, wobei das Risiko besteht, dass die Bedienperson den Grillrost fallen lässt oder sich daran verbrennt. Zudem ist die Montage und Herstellung der Rastschlitze aufwändig.

In der DE 30 26 169 wird eine Grillvorrichtung beschrieben, bei welcher der Abstand zwischen Holzkohle und Grillrost veränderbar ist, indem die Heizebene mit einem Stößel vertikal verstellbar ist. Hierbei sind jedoch nur wenige Einstellungen bzw. Stufen möglich, so dass die Anpassung an das jeweilige Grillgut unzureichend ist. Zudem ist die Einstellung des Abstandes zwischen Grillgut und Heizebene mit einem relativ großen Aufwand verbunden, insbesondere um die gewünschte Rastposition zu finden.

Aus der US-A-3 126 881 ist eine Grillvorrichtung mit einer kegelförmigen Außenschale bekannt, an der zwei Handgriffe außen angebracht sind. Eine Formstabilisierung der Außenschale ist hierdurch kaum gegeben.

Aufgabe der vorliegenden Erfindung ist es daher, die oben genannten Nachteile bekannter Grillvorrichtungen zu überwinden und einen Grill zur Verfügung zu stellen, der eine variable Hitzeregulierung auf komfortable und sichere Weise ermöglicht. Zudem soll eine praktische Bedienung mit guter Luftzufuhr und eine einfache Herstellung sichergestellt werden.

Die Lösung dieser Aufgabe erfolgt bei einer Grillvorrichtung mit den Merkmalen des Anspruchs 1. Bevorzugte Ausführungen sind Gegenstand der abhängigen Ansprüche.

Die erfindungsgemäße Grillvorrichtung, in Form eines Trichters oder Kegels, weist hierbei ein Gestänge zur stufenlosen Einstellung des Abstandes zwischen Grillrost und Heizebene auf. Hierdurch kann die Hitzeeinwirkung auf das Grillgut feinfühlig eingestellt werden. Zudem ist die Handhabung besonders einfach, da keine Rastschlitze "gesucht" werden müssen. Dies ist insofern wichtig, da am Grill eine große Hitzeabstrahlung besteht und somit beim "Suchen" der gewünschten Rasten beim Stand der Technik sogar eine Verbrennungsgefahr besteht.

Zudem erlaubt diese Lagerung an einer Schale (in Form eines Einsatzes) eine einfache Montage des Grills, was hier von wesentlicher Bedeutung ist. Da die trichterförmige Außenschale oft nur mit erheblichen Fertigungstoleranzen herzustellen ist, können diese durch die relativ nachgiebige Schale ausgeglichen werden. Hierzu ist die Schale bevorzugt mit dem Führungsrohr für das Gestänge verbunden und trägt unten einen scheibenförmigen Ring. Hierdurch kann diese Einheit in die konisch zulaufende Außenschale gesteckt werden und mit radial einsteckbaren Füßen des Untergestells verschraubt werden. Dadurch wird eine exakte Ausrichtung und Fixierung in der Außenschale erzielt, sowie deren Stabilität erhöht. Zudem können dadurch Rundheitsfehler der Außenschale ausgeglichen werden sowie die relativ dünne und damit materialsparende Außenschale ausgesteift werden.

Mit dieser einfachen und stufenlosen Höhenverstellung der Heizebene (Heizteller) wird zugleich die Luftzufuhr reguliert, so dass sich insgesamt eine komfortable und sichere Hitzeregulierung in allen Positionen (offen, halboffen und vielen Zwischenstellungen) ergibt. Die gleichzeitige Regelung von Abstand und Luftzufuhr mit nur einem Bedienelement sorgt für eine besonders einfache und intuitive Handhabung. Als Heizquelle der Grillvorrichtung wird insbesondere Holzkohle oder Grillbriketts verwendet, wobei unter der Heizebene eine etwa flächengleiche Aschenmulde integriert ist. Somit ist die Entsorgung der Asche besonders einfach möglich, da diese Einheit (nach Abkühlen) bei abgenommenem Grillrost einfach nach oben herausgehoben werden kann. Insgesamt wird auch die Betriebssicherheit der Grillvorrichtung erhöht, wobei zudem ein umschlossener Brennraum in Art eines Kamins gebildet wird, in dem optimale Luftströmungen herrschen.

Nachfolgend werden mehrere bevorzugte Ausführungsbeispiele der erfindungsgemäßen Grillvorrichtung (auch kurz als Kegelgrill bezeichnet) anhand der Zeichnung näher erläutert. Hierbei zeigen:
- Fig. 1: einer Grillvorrichtung in perspektivischer Darstellung,
- Fig. 2: eine Schnittansicht der Grillvorrichtung,
- Fig. 3: eine Schnittansicht gemäss Fig. 2 in Mittelstellung,
- Fig. 4: eine Schnittansicht gemäss Fig. 2 und 3 in höchster Stellung,
- Fig. 5: eine Baueinheit in separater Darstellung,
- Fig. 6: eine alternative Ausführung der Grillvorrichtung,
- Fig. 7: eine Schnittansicht gemäss Fig. 6 in Mittelstellung,
- Fig. 8: eine Seitenansicht ähnlich zu Fig. 1 mit teilweise abgedeckten Deckel.
- Fig. 9: eine Detailansicht auf das Untergestell, und
- Fig. 10: eine alternative Ausführung des Untergestells.

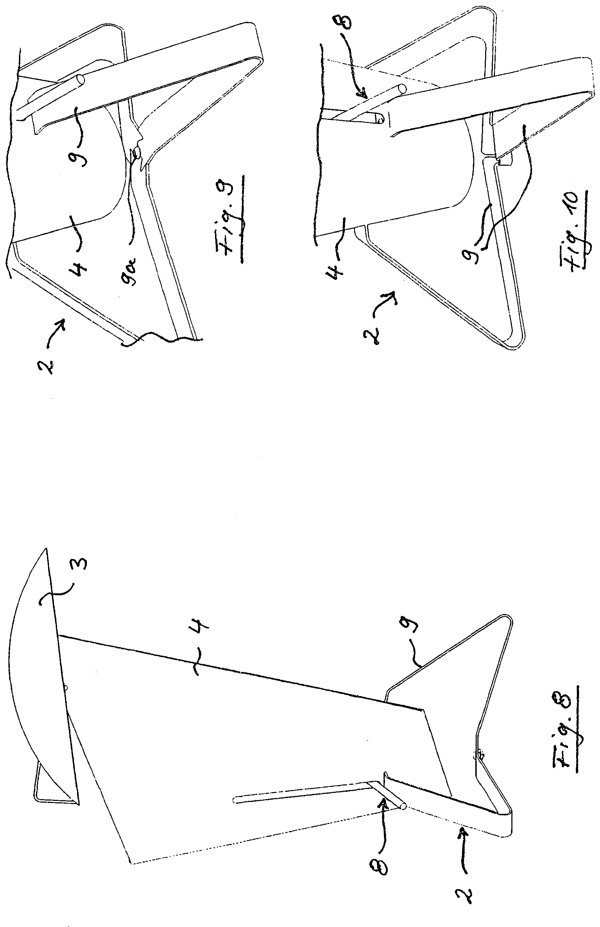

Bei der dargestellten Grillvorrichtung 1 handelt es sich um einen sog. Trichter- oder Kegelgrill, der zur bequemen Bedienung ein Untergestell 2 aufweist, wobei zum einfachen Transport im Garten oder auf der Terrasse auch ein Rad integriert sein kann. Beim Betrieb im Freien wird als Brennstoff bevorzugt Holzkohle oder Grillbriketts eingesetzt. Zudem ist ein Deckel 3 als Wetter- bzw. Windschutz vorgesehen, der mit einer Schwenkachse bzw. Koppel 3a in eine komplette oder auch teilweise Abdeckung (vgl. Fig. 8) der hier nach unten hin konisch geformten Außenschale 4 übergeführt werden kann. Die Außenschale 4 ist in Art eines Blechmantels geformt und nach unten hin zum Untergestell 2 offen, so dass für die Brennluft der gewünschte Kamineffekt innerhalb der Außenschale 4 entsteht. Oben ist die Außenschale 4 bevorzugt schräg ausgeführt, um einen Windschutz zu bilden und eine zweite Grillebene 5a zu ermöglichen. Darunter ist hier in der Außenschale 4 ein Loch 4' vorgesehen, in das ein Vorsprung oder Zapfen am unteren Rand des Deckels 3 einrasten kann, insbesondere mit dessen Zentrierung. Zudem weist die Außenschale 4 einen Durchtritt für ein seitlich herausstehendes Gestänge 8 auf, mit dem, wie nachfolgend beschrieben, der Abstand der Heizebene 6 zu einem Grillrost 5 eingestellt werden kann, der bevorzugt mittig klappbar ist.

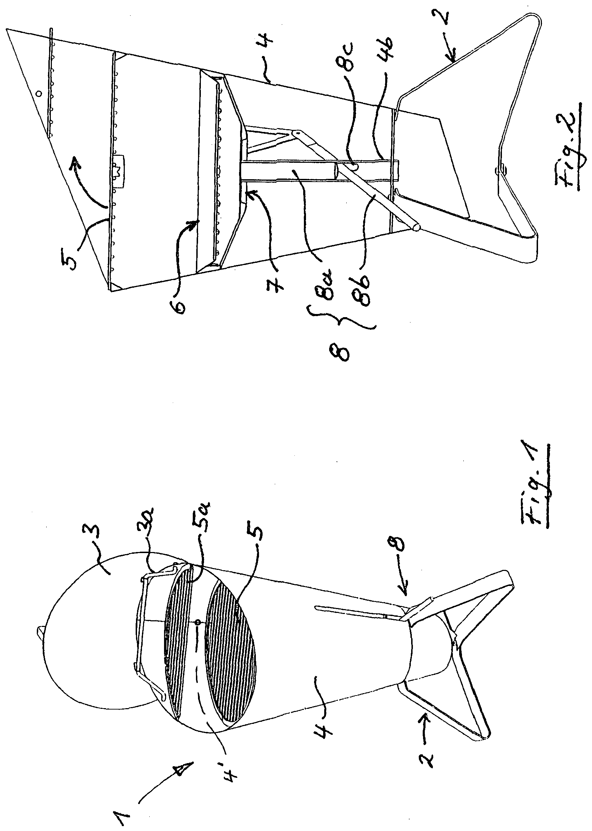

In Fig. 2 ist der Kegelgrill nach Fig. 1 im Schnitt gezeigt. Hierbei ist das Gestänge 8 (mit den Bauteilen 8a - 8c) in der untersten Stellung, wobei die Heizebene 6 vom Grillrost 5 den maximalen Abstand aufweist. Die Heizebene 6 ist hier zur Aufnahme von Grillkohle ausgelegt, wobei an der Unterseite ein Stößel 8a und eine Aschenmulde angeformt ist. Diese sitzt in der hier gezeigten, untersten Stellung auf Zuluftöffnungen 7 auf, so dass die Luftzufuhr unterbunden wird und der Grillbetrieb ggf. damit unterbrochen werden kann. Um die Zuluftöffnungen herum ist eine Erhöhung oder ein Ringbund vorgesehen, damit keine Asche hindurch fällt. Der Stößel 8a ist in einem Führungsrohr 4b in Vertikalrichtung geführt, das an der Unterseite einer die Zuluftöffnungen 7 umgebenden Schale 4a befestigt ist. Das Gestänge 8 weist neben dem Stößel 8a eine Verstellstange 8b auf, die in einem Schlitz 8c in dem Führungsrohr 4b geführt ist.

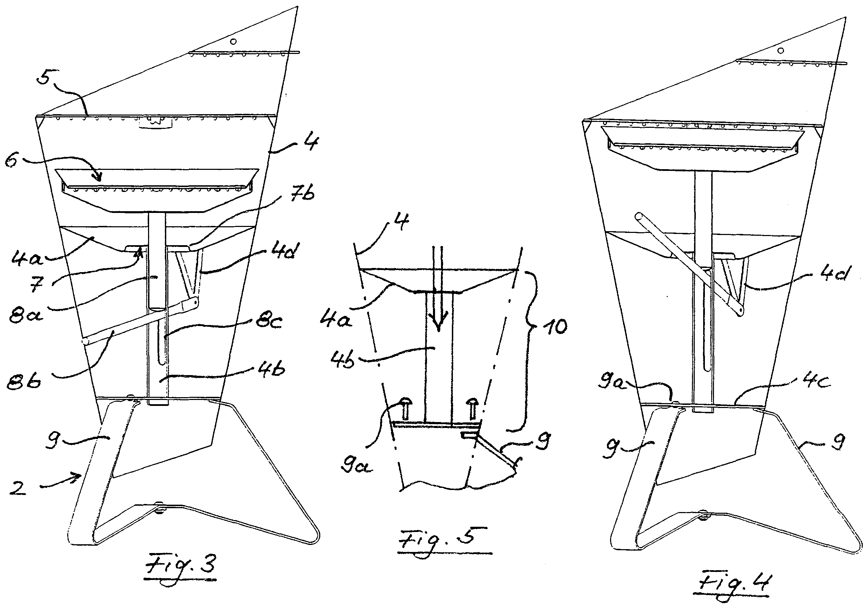

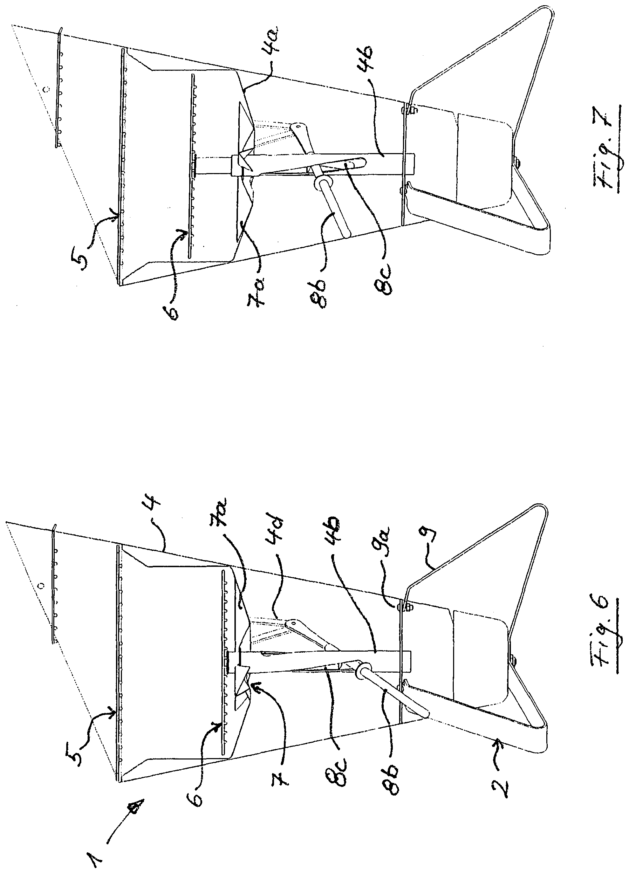

Wie in Fig. 3 (mit Mittelposition des Gestänges 8 und ansonsten gleicher Bezeichnung für die Bauteile) gezeigt, ist das innere Ende der Verstellstange 8b mit einer Konsole 4d an der Schale 4a schwenkbar gelagert, so dass das untere Ende des Stößels 8a auf der weitgehend quer verlaufenden Verstellstange 8b aufliegt. Somit ist der Abstand zwischen dem Grillrost 5 und der Heizebene 6 über das Gestänge 8 stufenlos verstellbar, wobei die Verstellstange 8b in dem Schlitz 8c exakt geführt wird. Der Schlitz 8c im Führungsrohr 4b ist bevorzugt gerade ausgeführt, kann aber auch wendelförmig sein (vgl. Fig. 6 und 7). Um die Zuluftöffnung (-en) 7 herum ist ein erhöhter Bund 7b, insbesondere in Ringform vorgesehen, so dass ggf. aus dem Heizteller 6 fallende Asche oder Glut nach unten hindurch fallen kann.

In Fig. 4 ist die höchste Stellung der Heizebene 6 direkt unter dem Grillrost 5 der Grillvorrichtung 1 gezeigt. Wie aus dem Vergleich der Fig. 1 bis 4 ersichtlich, lässt sich das aus dem der Außenschale 4 herausragende Gestänge 8 einfach greifen und stufenlos verstellen. In den unteren Positionen (Fig. 1 und 2, sowie ggf. Fig. 3) lässt sich das nach außen stehende Ende des Gestänges 8 sogar in Art eines Pedals mit dem Fuß betätigen, so dass umständliches Bücken entfällt. Das innere Ende der Verstellstange 8b ist bevorzugt über eine Halterung bzw. Konsole 4d an der Schale 4a schwenkbar gelagert, wobei an der Schwenkachse insbesondere kraftschlüssige Reibbeläge unter der Beaufschlagung von Tellerfedern vorgesehen sind, so dass die Verstellstange 8b in beliebigen Stellungen (wie in Fig. 2 bis 4 angedeutet) selbsttätig fixiert ist, also ohne (manuelle) Kraft am äußeren Ende der Verstellstange die gewählte Lage beibehält.

Von besonderer Bedeutung ist die Montage der Grillvorrichtung 1 mit einer in Fig. 5 gezeigten Baueinheit 10, bestehend aus den auch in Fig. 2 bis 4 dargestellten Bauteilen. Hierbei ist das untere Ende des Führungsrohrs 4b mit einem scheiben- oder bevorzugt speichenförmigen Ring 4c verbunden, der einen kleineren Durchmesser als die Schale 4a aufweist. Da die Füße 9 des Untergestells 2 radial in die Außenschale 4 einsteckbar sind, können diese mit dem Ring 4c einfach verschraubt werden, so dass die Schale 4a (über das damit verbundene Führungsrohr 4b) im Inneren der Außenschale 4 nach unten gezogen wird (vgl. Doppelpfeil) und dort dann sicher fixiert ist. Zudem wird hierdurch die (hier in Strichpunktlinien dargestellte) Außenschale 4 stabilisiert und in der bevorzugten runden Form gehalten. Durch die Tellerform der Schale 4a bzw. Speichenform des Rings 4c ist hierbei auch eine gewisse Nachgiebigkeit zur Anpassung an die (oft aus Edelstahlblech hergestellte) Außenschale 4 gegeben, die damit mit höheren Toleranzen gefertigt werden kann.

In Fig. 6 und 7 ist eine abgewandelte Ausführung der Grillvorrichtung 1 gezeigt, wobei der Schlitz 8c wendelförmig ausgebildet ist und die Zuluftöffnungen 7 sternförmig an der hier ebenfalls abgewandelten Schale 4a ausgeformt sind. Über diese sternförmige Gestaltung ist auch die Heizebene 6 geführt, wobei die Schale 4a mit dem Führungsrohr 4b für das Gestänge 8 verbunden ist. Durch den wendelförmigen Schlitz 8c wird bei der Höhenverstellung der Verstellstange 8b der Stern 7a mitgedreht, wie aus dem Vergleich zwischen Fig. 6 und 7 erkennbar ist. In der untersten Position (Fig. 6) überlagert der Stern 7a die Zuluftöffnungen 7, so dass die Luftzufuhr gedrosselt wird. Zudem kann durch die Drehung des Sterns 7a eine Reinigung im Innern der Grillvorrichtung erfolgen.

Insgesamt wird somit eine Grillvorrichtung 1 geschaffen, die eine einfache und genaue Einstellung des Abstandes zwischen Grillrost 5 und Heizebene 6 ermöglicht und damit eine schonende und gleichmäßige Garwirkung erzielt. Weiterhin wird die Bedienung erheblich erleichtert. Auch die Montage wird wesentlich vereinfacht, ebenso die Demontage, um beispielsweise die Einzelteile des Kegelgrills zu reinigen.

In Fig. 8 ist der einfache Aufbau erkennbar, ebenso die Verschwenkung des Deckels 3 in eine teilweise Abdeckposition, in der das Grillgut gut vor Wind geschützt ist, aber ggf. entstehender Rauch dennnoch gut entweichen kann. Ebenso ist das einfach aufgebaute Untergestell 2 dargestellt, wobei die oberen Enden der Füße 9 in die Außenschale 4 eingesteckt werden, wie oben bei Fig. 6 und 7 beschrieben.

In Fig. 9 ist das Untergestell 2 im Detail gezeigt, wobei ersichtlich ist, dass die drei bügelförmig gebogenen Füße 9 zentral zusammenlaufen und dort mit einen Verbindungselement, bevorzugt mit einer Schraube 9a (ähnlich wie in Fig. 5 angedeutet) verbunden sind. Alternativ ist es auch möglich, die drei (oder vier) Füße 9 aus einem Blechzuschnitt auszustanzen und dann in die Position zu biegen, wie dies in Fig. 10 dargestellt ist. Es sei darauf hingewiesen, dass die Füße 9 in ihrem zentralen Bereich (also unter der Mittelachse der Grillvorrichtung 1) zusammenhängend ausgeformt sind, so dass neben dem Einstecken der oberen Bereiche der Füße in die Außenschale 4 (und Verbinden insbesondere mit dem Ring 4c; vgl. Fig. 4 und 5) keine weiteren Montagearbeiten erforderlich sind. Zudem ist hier das nach außen ragende Ende des Gestänges 8 (bzw. der Verstellstange 8b) über einem Fuß 9 angeordnet, so dass dieser als Schuhabstützung für eine Bedienperson dienen kann, um mit der Schuhspitze (oder durch Anheben des menschlichen Fußes) die Verstellstange 8b zu bedienen, also ohne Bücken das Gestänge 8 nach oben oder unten zu drücken.

### Bezugszeichenliste :

- 1: Grillvorrichtung
- 2: Untergestell
- 3: Deckel (mit Koppel 3a)
- 4: Außenschale (mit Loch 4')
- 4a: Schale
- 4b: Führungsrohr
- 4c: Ring
- 4d: Konsole
- 5: Grillrost
- 6: Heizebene (Grillkohlenteller);
- 7: Zuluftöffnung
- 7: a Stern
- 7b: Bund
- 8: Gestänge
- 8a: Stößel
- 8b: Verstellstange
- 8c: Schlitz
- 9: Füße
- 9a: Schrauben
- 10: Baueinheit

## Patentansprüche

1. Grillvorrichtung, mit einer Außenschale (4) in Kegelform, in der eine Heizebene (6) und ein Grillrost (5) angeordnet sind, wobei der vertikale Abstand zwischen Grillrost (5) und Heizebene (6) einstellbar ist, **dadurch gekennzeichnet, dass**
die Außenschale (4) durch eine innerhalb der Außenschale (4) angeordnete Baueinheit (10) stabilisiert ist, die insbesondere aus Schale (4a), Führungsrohr (4b) und Ring (4c) gebildet ist, und die in der Außenschale (4), insbesondere über Schrauben (9a), verspannbar ist, vorzugsweise an radial einsteckbaren Füßen (9) eines Untergestells (2).

2. Grillvorrichtung nach Anspruch 1, **dadurch gekennzeichnet, dass**
der Abstand zwischen Grillrost (5) und Heizebene (6) über ein Gestänge (8) stufenlos verstellbar ist, wobei das Gestänge (8) einen vertikal verlaufenden Stößel (8a) zur Heizebene (6) hin aufweist.

3. Grillvorrichtung nach Anspruch 2, **dadurch gekennzeichnet, dass**
das untere Ende des Stößels (8a) auf einer weitgehend quer verlaufenden Verstellstange (8b) aufliegt, die in mindestens einem Schlitz (8c) geführt ist.

4. Grillvorrichtung nach Anspruch 3, **dadurch gekennzeichnet, dass**
das Gestänge (8) mit dem inneren Ende der Verstellstange (8b) an einer Schale (4a) schwenkbar gelagert ist, insbesondere mit kraftschlüssiger Federbeaufschlagung, zur Fixierung der Verstellstange (8b) in beliebigen Stellungen.

5. Grillvorrichtung nach Anspruch 4, **dadurch gekennzeichnet, dass**
die Schale (4a) mit einem Führungsrohr (4b) für das Gestänge (8) verbunden ist.

6. Grillvorrichtung nach Anspruch 5, **dadurch gekennzeichnet, dass**
das untere Ende des Führungsrohrs (4b) mit einem Ring (4c) verbunden ist, der einen kleineren Durchmesser als die Schale (4a) aufweist.

7. Grillvorrichtung nach Anspruch 6, **dadurch gekennzeichnet, dass**
der Ring (4c) mit radial einsteckbaren Füßen (9) verschraubt ist, wobei der Ring (4c) und die Schale (4a) im Inneren der Außenschale (4) fixiert sind.

8. Grillvorrichtung nach einem der vorstehenden Ansprüche, **dadurch gekennzeichnet, dass** eine Haube (3), vorzugsweise über eine Koppel (3a) an der Außenschale (4) anbringbar ist und die Grillvorrichtung (1) ganz oder nur teilweise abdeckt, wobei die Haube (3) in ihrer Offenstellung an der Außenschale (4) einrastet, insbesondere mit einem Vorsprung.

9. Grillvorrichtung nach einem der vorstehenden Ansprüche, **dadurch gekennzeichnet, dass** das Untergestell (2) durch bevorzugt drei baugleiche Füße (9) gebildet ist, die vorzugsweise ineinander greifen und durch ein Verbindungselement, insbesondere eine Schraube zentral fixiert sind.

10. Grillvorrichtung nach Anspruch 8, **dadurch gekennzeichnet, dass** die Koppel (3a) biegbar oder federweich ausgeführt ist, um werkzeuglos an der Außenschale (4) montiert zu werden.

## Claims

1. Grill device having an outer shell of conical shape, in which a heating level (6) and a grill (5) are arranged, wherein the vertical distance between the grill (5) and the heating level (6) is adjustable, **characterized in that**
the outer shell (4) is stabilized by an assembly (10), in particular formed by a shell (4a), guide tube (4b) and ring (4c), and arranged in the outer shell (4) to be clamped in the outer shell (4), in particular via screws (9a).

2. Grill device according to claim 1, **characterized in that**
the distance between the grill (5) and heating level (6) is continuously adjustable via a linkage (8), wherein the linkage (8) has a vertically extending plunger (8a) towards the heating level (6).

3. Grill device according to claim 2, **characterized in that**
the lower end of the plunger (8a) rests on a largely transverse-directed rod (8b), being guided in at least one slot (8c).

4. Grill device according to claim 3, **characterized in that**
the linkage (8) is pivotally mounted on a shell (4a) with its inner end of the adjusting rod (8b), in particular with positive spring action for fixing the adjusting rod (8b) in any position.

5. Grill device according to claim 4, **characterized in that**
the shell (4a) is connected to a guide tube (4b) for the linkage (8).

6. Grill device according to claim 5, **characterized in that**
the lower end of the guide tube (4b) is connected to a ring (4c) having a smaller diameter than the shell (4a).

7. Grill device according to claim 6, **characterized in that**
the ring (4c) is screwed to radially insertable feet (9), wherein the ring (4c) and the shell (4a) are fixed in the interior of the outer shell (4).

8. Grill device according to one of the preceding claims, **characterized in that**
a hood (3) is attached to the outer shell (4), preferably via a coupling (3a) for complete or partial covering of the grill device (1), wherein the hood (3) latches to the outer shell (4) in its open position, especially by a protrusion.

9. Grill device according to one of the preceding claims, **characterized in that**
the lower frame (2) is formed by three, preferably identical feet (9), which preferably engage with each other and are centrally fixed by a connecting element, in particular a screw.

10. Grill device according to claim 8, **characterized in that**
the coupling (3a) is designed to be bendable or elastic in order to be mounted on the outer shell (4) without tools.

## Revendications

1. Dispositif pour réaliser des grillades, avec une coque extérieure (4) de forme conique dans laquelle sont disposés un plan de chauffe (6) et une grille de gril (5), sachant que la distance verticale entre la grille de gril (5) et le plan de chauffe (6) est réglable, **caractérisé en ce que** la coque extérieure (4) est stabilisée par une unité modulaire (10) disposée à l'intérieur de la coque extérieure (4), unité qui est notamment formée d'une coque (4a), d'un tube de guidage (4b) et d'une bague (4c), et qui peut être assemblée avec serrage dans la coque extérieure (4), en particulier par l'intermédiaire de vis (9a), de préférence au niveau de pieds radialement emboîtables (9) d'un bâti inférieur (2).

2. Dispositif pour réaliser des grillades selon la revendication 1, **caractérisé en ce que** la distance entre la grille de gril (5) et le plan de chauffe (6) peut être réglée en continu par l'intermédiaire d'une tringlerie (8), sachant que la tringlerie (8) présente un poussoir (8a) s'étendant verticalement en direction du plan de chauffe (6).

3. Dispositif pour réaliser des grillades selon la revendication 2, **caractérisé en ce que** l'extrémité inférieure du poussoir (8a) repose sur une tringle de réglage (8b) s'étendant essentiellement transversalement, qui est guidée dans au moins une fente (8c).

4. Dispositif pour réaliser des grillades selon la revendication 3, **caractérisé en ce que** la tringlerie (8) est montée pivotante par l'extrémité intérieure de la tringle de réglage (8b) sur une coque (4a), en particulier avec sollicitation à force par ressort, afin de fixer la tringle de réglage (8b) dans n'importe quelle position.

5. Dispositif pour réaliser des grillades selon la revendication 4, **caractérisé en ce que** la coque (4a) est reliée à un tube de guidage (4b) pour la tringlerie (8).

6. Dispositif pour réaliser des grillades selon la revendication 5, **caractérisé en ce que** l'extrémité inférieure du tube de guidage (4b) est reliée à une bague (4c) qui présente un plus petit diamètre que la coque (4a).

7. Dispositif pour réaliser des grillades selon la revendication 6, **caractérisé en ce que** la bague (4c) est assemblée par vissage à des pieds radialement emboîtables (9), sachant que la bague (4c) et la coque (4a) sont fixées en position à l'intérieur de la coque extérieure (4).

8. Dispositif pour réaliser des grillades selon l'une des revendications précédentes, **caractérisé en ce qu'**un capot (4) peut être installé sur la coque extérieure (4), de préférence par l'intermédiaire d'une bielle (3a), et recouvre totalement ou seulement partiellement le dispositif (1) pour réaliser des grillades, sachant que le capot (3) s'enclenche dans sa position ouverte sur la coque extérieure (4), en particulier par une saillie.

9. Dispositif pour réaliser des grillades selon l'une des revendications précédentes, **caractérisé en ce que** le bâti inférieur (2) est formé par trois pieds (9) de préférence de construction identique, qui de préférence s'engagent les uns dans les autres et sont fixés en position centralement par un élément de liaison, en particulier une vis.

10. Dispositif pour réaliser des grillades selon la revendication 8, **caractérisé en ce que** la bielle (3a) est réalisée flexible ou souple, afin d'être montée sans outil sur la coque extérieure (4).
